# EUROPÄISCHE PATENTANMELDUNG

(11) **EP 0 831 321 A2**
(43) Veröffentlichungstag der Anmeldung: **25.03.1998**
(21) Anmeldenummer: 97112442.5
(22) Anmeldetag: 21.07.1997
(51) Int. Cl.: G01N 21/91

(54) **Rissprüfanlage mit Selbstüberprüfung**

(30) Priorität: 23.09.1996 DE 19639020
(71) Anmelder: TIEDE GMBH + CO RISSPRÜFANLAGEN, D-73457 Essingen (DE)
(72) Erfinder: Abend, Klaus, Prof. Dr.-Ing., 73457 Essingen (DE); Sendeff, Eduard, Dipl.-Ing., 73453 Abtsgmünd (DE)
(74) Vertreter: Neidl-Stippler & Partner

(57) **Zusammenfassung**

Die Erfindung betrifft eine Rißprüfanlage, in der in an sich bekannter Weise Werkstücke für die Farbeindringprüfung mit Farbstoffe aufweisendem Prüfmittel unter Anreicherung der Farbstoffe an Oberflächenfehlern behandelt, unter Beleuchtung durch einen Beleuchtungskörper bewertet werden, die eine eine Selbstprüf- und Funktionsüberwachungseinrichtung (14) mit
- einem Prozessor (25)
- mindestens einer Meßstation (15 - 18) für die Erfassung von Arbeits-Meßgrößen, deren mindestens ein Ausgang mit dem mindestens einen Eingang des Prozessors (25) verbunden ist;
- mindestens ein mit dem Prozessor verbundenes Anzeige- bzw. Datensichtgerät (20) zur Anzeige einer oder mehrerer Meßgrößen,
- mindestens eine mit dem Prozessor verbundene Nachregelungseinheit (21) zur Nachregelung von Anlagenparametern, und
- mindestens eine Datenaufzeichnungsstation zur permanenten Aufzeichnung der gemessenen Daten aufweist.

## Beschreibung

Die Erfindung betrifft eine Rißprüfanlage, in der in an sich bekannter Weise Werkstücke für die Farbeindringprüfung mit Farbstoffe aufweisendem Prüfmittel unter Anreicherung der Farbstoffe an Oberflächenfehlern behandelt und unter Beleuchtung durch einen Beleuchtungskörper bewertet werden.

In dieser werden in der in an sich bekannter Weise Werkstücke für die Farbeindringprüfung vorbereitet, indem sie gereinigt, ggf. gebeizt und getrocknet werden, mit einem Farbstoffe, insbesondere auch Fluoreszenzfarbstoffe, aufweisenden Prüfmittel unter Anreicherung der Farbstoffe an Oberflächen-fehlern, insbesondere Rissen, besprüht, sodann vom überschüssigen farbstoffhaltigen Prüfmittel, bspw. durch Abstreifen oder Abwischen befreit, das so behandelte Werkstück ggf. mit einem Entwickler behandelt und sodann nach einer vorherbestimmten Entwicklungszeit unter UV- oder sichtbarem Licht betrachtet und ausgewertet wird. Dabei wird nun häufig aus Umweltschutz- und Kostengründen das Prüfmittel und auch die Spülmittel sowie der Entwickler im Kreis geführt.

Es handelt sich dabei um Anlagen, die Routineuntersuchungen auf Risse insbesondere bei nicht magnetisierbaren Werkstücken, wie solchen aus Magnesium- oder Aluminiumlegierungen oder Keramik, ermöglichen.

Bisher wurden diese Untersuchungen meist von Bedienungspersonal durchgeführt und durch Augenschein ausgewertet. Die Anmelderin hat bereits Verfahren zur Farbeindringprüfung vorgeschlagen, nebst zugehöriger Vorrichtung.

Die Überprüfung, die durch die bekannte Ausführung erfolgt, ist jedoch noch verbesserungsfähig, da häufig mit erschöpftem Prüfmittel, das im Kreis geführt wurde, gearbeitet wurde, wodurch die Markierung der Fehler unzuverlässig erfolgte. Auch die Reinigungslösungen sowie der Entwickler nehmen mit der Zeit Bestandteile auf bzw. verbrauchen sich, sodaß sie bisher meist unabhängig davon, ob sie wirklich verbraucht waren, ausgetauscht wurden. Dies stellte einen unzufriedenstellenden Zustand dar, da eigentlich unklar war, ob die vorangegangenen Messungen noch zuverlässig waren oder ob möglicherweise unnötig noch verwendungsfähiges Material vernichtet wurde. Eine weitere Fehlermöglichkeit ergab sich daraus, daß die zur Bestrahlung der Teile verwendeten Lampens sowie auch die Strahlungssensoren stets einem natürlichen Alterungsprozeß unterliegen, innerhalb dessen sie ihr Spektrum und die Leuchtintensität ändern.

Schließlich ist eine weitere Fehlermöglichkeit die Ermüdung der Personen, die diese Prüfung übernehmen.

Aus der DE 39 07 732 ist nun bereits ein Verfahren zum Überwachen einer Vorrichtung zum Auswerten von Oberflächenrissen mittels des Farbeindringverfahrens bekannt geworden, bei dem die Lampenintensität und die Prüfmittelqualität überwacht werden und bei nicht zufriedenstellenden Resultaten die Anlage abgeschaltet wird. Die Überwachungssignale werden dort aber nur zum Abschalten der Anlage verwendet - eine Nachregelung des Prüfmittelgehalts oder aber der Lampenintensität ist dort nicht vorgesehen, geschweige denn eine Dokumentation der Daten über das Anlagenverhalten. Somit ist diese bekannte Anlage nur dazu imstande, ein Abschalten der Anlage durchzuführen, nicht aber, deren Zustand sowie deren Anzeigen laufend zu überwachen, ggf. nachzuregeln und zu dokumentieren, wie es beim Qualitätsmanagement verlangt wird.

Der Stand der Technik vernachlässigt daher die Gesichtspunkte der Aufzeichnung bzw. Dokumentation der Ergebnisse sowie der Reproduzierbarkeit der Ergebnisse - also auch der Überprüfung des Funktionserhalts der Überprüfungsanlage selbst. Dies liefert jedoch eine zusätzliche Sicherheit, wenn in, insbesondere automatischen, Prüfanlagen über eine längere Betriebszeit hinweg Gesichtspunkte zur Senkung der Kosten oder Erhöhung der Sicherheit, daß fehlerhaft einzustufende Werkstücke sicherer beurteilt werden könnten, anstehen.

Bisher wurde durch regelmäßigen Durchlauf von sogenannten Testkörpern mit vorgegebenen Testfehlern festgestellt, ob diese noch richtig erkannt wurden - durch dieses Verfahren konnte allerdings nur festgestellt werden, daß der Testkörper nicht erkannt wurde, nicht aber, warum nicht. Da keine Dokumentation erstellt wurde, war auch nicht nachvollziehbar, ab wann die Anlage unzufriedenstellend arbeitete und warum.

Dementsprechend liegt der Erfindung die Aufgabe zugrunde, die Sicherheit und die Effektivität von Rißprüfanlagen nach dem Farbeindringverfahren zu verbessern bzw. die Betriebsdauer zu erhöhen.

Diese Aufgabe wird durch eine gattungsgemäße Rißprüfanlage gelöst, die eine Selbstprüf- und Funktionsüberwachungseinrichtung mit einem Prozessor; mindestens einer Meßstation für die Erfassung von Arbeits-Meßgrößen, deren mindestens ein Ausgang mit dem mindestens einen Eingang des Prozessors verbunden ist; mindestens ein mit dem Prozessor verbundenes Anzeige- bzw. Datensichtgerät zur Anzeige einer oder mehrerer Meßgrößen; mindestens einer mit dem Prozessor verbundenen Nachregelungs-einheit zur Nachregelung von Anlagenparametern, und mindestens eine Datenaufzeichnungsstation zur permanenten Auf-zeichnung der gemessenen Daten aufweist.

Dadurch, daß die erfaßten Daten der Rißprüfanlage stets überwacht und dokumentiert werden, ist es möglich, Angaben über die geprüften Teile zur Verfügung zu stellen, die den Anforderungen an eine moderne Qualitätssicherung genügen. Durch die Überwachung der verwendeten Verbrauchsmittel, wie Lampen und Flüssigkeiten kann ein vorzeitiger, kostenauf-wendiger Austausch vermieden werden - durch Nachregelungs-einheiten erhöht sich die Betriebsdauer einer ununterbrochen laufenden Anlage erheblich. Durch Durchlaufenlassen von Test-körpern mit Testfehlern, die ebenfalls dokumentiert werden, läßt sich auch die Zuverlässigkeit der Prüfer beurteilen und dokumentieren. Somit wird erfindungsgemäß eine effizienter und sicherer arbeitende Prüfanlage zur Verfügung gestellt.

Es ist besonders bevorzugt, daß eine Kamera zur Erfassung der integralen Empfindlichkeit vorgesehen ist, die einen automatisierten Testfehlerdurchlauf automatisch aufnimmt und die gemessenen Signale einer Bewertung zuführt. Durch diese Bewertung, die bspw. im Prozessor stattfinden kann und deren Ergebnis dokumentiert wird, ist es möglich, das gesamte Anlagenverhalten als auch das Verhalten der Einzelkomponenten, soweit sie einzeln überwacht werden, nachzuweisen, sodaß die Anlage Operator-unabhängig dokumentiert werden kann. Die Ergebnisse können dann auch bei Wiederholungsprüfungen von Gegenständen, wie bspw. Turbinenschaufeln, die regelmäßig auf Schäden untersucht werden, mit früher aufgenommenen Werten verglichen werden, insbesondere, wenn gleichzeitig mit den Anlagedaten auch die Chargennummern aufgezeichnet werden.

Dabei ist es sinnvoll, daß die Meßstationen für die Erfassung von Arbeits-Meßgrößen mindestens eine Einrichtung ausgewählt aus den nachfolgenden, aufweisen:
- eine Einrichtung zur Überprüfung der Funktion des Beleuch tungskörpers und der Strahlungsempfänger,
- eine Einrichtung zur Überprüfung des ggf. im Kreis geführten Prüfmittels,
- eine Einrichtung zur Überprüfung der ggf. im Kreis geführten Entwicklerflüssigkeit
- eine Einrichtung zur Überprüfung der ggf. im Kreis geführten Beizmittel
- eine Einrichtung zur Überprüfung einer oder mehrerer im Kreis geführter Reinigungsmittel,
- eine Meßeinrichtung für die Erfassung unmittelbar werkstückbezogener Parameter, wie Teile-Identifizierungs-Nummern, Stückzahl, und/oder Bewertungsgrößen der Rißbildung, wie Gut/Schlecht-Aussage, Fehlergrößenbeurteilung nach vorgegebenem Größenintervall oder in vorgegebenem Oberflächenbereich, umfasst,
wobei Meßstationen Prüfsignale ausgeben und in den Prozessor leiten, der dazu befähigt ist, aus diesen Signalen aufgrund eines abgespeicherten Verarbeitungsprogramms, das ggf. auch abgespeicherte Nachschlagetabellen oder Vergleichswerte in einem Speicher verwendet, ein oder mehrere Endausgabesignale herzustellen, die sodann weiterverarbeitbar sind, wobei der Prozessor mit einem Ausgabegerät für permanente Aufzeich-nungen, wie einem Drucker und/oder einer optischen oder magnetischen Speichereinheit und/oder einem Anzeigegerät und/oder einer Datenfernübertragungsvorrichtung zur Verarbeitung/Anzeige/Speicherung der Daten an einem anderen Ort verbunden ist.

Die Einrichtungen sind als solche dem Fachmann bekannt, bspw. ist die Überprüfung der Funktion des Beleuchtungskörpers, meist einer Lampe, notwendig. Die Lampen müssen ständig auf ihre Emission überprüft werden, dadurch kann ein Absinken insbesondere der kurzwelligen Spektralanteile, wie der UV-Intensität im Lampenspektrum, wie allgemein bekannt ist, durch entsprechende Maßnahmen kompensiert werden - entweder wird die Lampe ausgewechselt, deren Betriebsspannung nachgeregelt oder auch die Empfindlichkeit der Sensoren entsprechend nachgeeicht um so die durch veringerte Einstrahlungsintensität zustandegekommenen geringeren Meßsignale auszugleichen und die Aussage über die gemessenen Intensitäten gerätespezifisch nachzueichen.
Eine geeignete Anlage für eine Lampenüberprüfung, die aber keineswegs die einzige geeignete Anlage darstellt, ist aus DE-A-40 13 133.5 bekannt.

Einrichtungen zur Überprüfung des ggf. im Kreis geführten Prüfmittels, das eine Suspension eines Farbstoffes eingeschlossen Fluoreszenzfarbstoffe, in einem Lösungsmittel ist, sind bspw. aus der DE-A-4438510.2 bekannt. Dadurch kann sichergestellt werden, daß Veränderungen in der Prüfmittelsuspension, die aus einer Flüssigkeit bevorzugt mit einfachem Farbstoff oder Fluoreszenzfarbstoff angefärbten Partikeln besteht, wie sie durch Abrieb oder Zerfall der Farbstoff-partikel bei längerem Umwälzen der Flüssigkeit, Abgabe des Farbstoffes auf den Partikeln oder auch Verlust an farbigen Partikeln, die auf den verschiedenen gemessenen Prüfkörpern verbleiben, auftritt, erkannt werden.

Anlagen zur Überprüfung der übrigen Reinigungs- bzw. Beizflüssigkeiten sind dem Fachmann bekannt - so kann bspw. der Reinigungsmittelgehalt spektroskopisch und/oder elektro-chemisch überwacht werden.

Auch Erfassungsanlagen für Teileparameter, die bspw. durch einen Strichcode od. dgl. gekennzeichnet sind, sind bekannt und sollen daher nicht weiter erläutert werden.

Es ist sinnvoll, daß die Signale der Überprüfungseinrichtung(en) in Nachregeleinheiten zum Nachregeln der entsprechenden überprüften Größen geleitet sind.

Diese können eine Einrichtung zur Nachregelung der Beleuchtungskörperspannung bzw. der Sensorempfindlichkeit der Lampenüberwachungssensoren durch den Prozessor (25) aufweisen. Die Nachregeleinheiten können auch eine Einrichtung zur Nachregelung der Prüfmittelkonzentration durch Nachdosieren von Farbstoff durch den Prozessor aufweisen; derartige Nach-dosiereinrichtungen sind dem Fachmann geläufig, wie auch solche für die Nachregelung der Reinigungsmittelkonzen-tration durch Nachdosieren von Reinigungsmittel und/oder Lösungsmittel durch den Prozessor.

Vorteilhafterweise weisen die Nachregelungseinheiten Einrichtungen zur Nachregelung der Beizmittelkonzentration durch Nachdosieren von Beizmittel oder Lösungsmittel durch den Prozessor auf.

Selbstverständlich müssen erfindungsgemäß nicht alle Flüssigkeiten im Kreis geführt werden - für bestimmte Anwendungsfälle oder bspw. bei kleinen Stückzahlen oder spezielle Prüfmittel für einen besonderern Anwendungsfall, die einfach mit Spraydosen od. dgl. aufgebracht werden, ist dies möglicherweise nicht sinnvoll - allerdings ist dann immer noch die Überwachung von Teilegrößen, der Beleuchtung und der Photoempfindlichen Sensoren etc. wichtig und auch deren Dokumentation. Somit ist die Erfindung keineswegs auf Anlagen beschränkt, die alle diese Merkmale aufweisen, auch sinnvolle Unterkombinationen, wie dem Fachmann ersichtlich, können die Erfindung verwirklichen.

Vorteilhafte Ausgestaltungen ergeben sich aus den Unteransprüchen.

Dadurch, daß nun ein dokumentiertes Prüfprotokoll von den überwachten Betriebsgrößen und insbesondere auch eine operator-unabhängige, ggf. digitalisierte, automatisierte Anzeige der Funktion der Anlage erstellt wird, können nun Fehler gezielt aufgefunden werden. Im Regreßfall kann nachgewiesen werden, welcher Prüfling von welcher Maschine wie bewertet wurde, und ob die Rißprüfanlage zu diesem Zeitpunkt zufriedenstellend arbeitete und von welchem Prüfer wann geprüft wurde. Durch regelmäßige Überprüfung der im Kreislauf geführten, fluiden Medien, die nach Abtropfen vom Prüfling regelmäßig wieder in einem Sammelbehälter gepoolt und wiederverwendet werden, auf Funktion und Alterung, ggf. Gehalt an Farb-Partikeln - denn auf den Prüflingen verbleibt üblicherweise ein Partikel- und Lösungsmittelrest; Lösungsmittel verdampfen aber auch - ; Überprüfung der Bestrahlungseinrichtungen und der Strahlungsmeßeinrichtungen auf Funktionsfähigkeit kann nun die Funktion der Prüfanlage überwacht und auf gleichem Niveau gehalten werden. Dadurch, daß nun auch die Funktion der Überprüfungsanlage und deren Einzelbestandteile automatisch in vorgegebenen Intervallen erfolgen kann, sind folgende Vorteile gewahrt:
durch Nachregeln der Lampenspannung - abgesehen von den Funktionen der Kostenkontrolle bzw. Gewährleistung sowie ggf. der Nachregelung der Farbstoffkonzentration kann eine gleichbleibende Qualität der Prüfeinrichtung erhalten werden. Die Prüfmittelsuspension kann zunächst durch Nachdosieren von Farbstoff auf einem konstanten Niveau gehalten werden und muß erst dann, wenn bekannt ist, daß sie erschöpft ist und keine zufriedenstellenden Meßergebnisse liefert - dann muß sie ausgewechselt/entsprechend ihre Nachlieferung veranlaßt werden.

Dadurch, daß eine automatisierte in line arbeitende Prüfmittelüberprüfungseinrichtung, bspw. eine solche, die in der DE-A-4438510.2 beschrieben ist, vorgesehen ist, kann sichergestellt werden, daß Veränderungen in der Prüfmittel-suspension, die aus einer Flüssigkeit bevorzugt mit einfachem Farbstoff oder Fluoreszenzfarbstoff angefärbten Partikeln besteht, wie sie durch Abrieb oder Zerfall der Farbstoffpar-tikel bei längerem Umwälzen der Flüssigkeit, Abgabe des Farbstoffes auf den Partikeln oder auch Verlust an magnetischen Partikeln, die auf den verschiedenen gemessenen Prüfkörpern verbleiben, erkannt und entsprechend gehandelt werden kann. So kann dann entweder neue Suspension eingesetzt, Farbstoff Pulver in die Suspension nachdosiert werden oder auch zumindest nachbestellt werden.

Auch die übrigen Flüssigkeiten können auf Erschöpfung untersucht werden, bspw. durch optische Meßverfahren und/oder Messung der Leitfähigkeit und dies können durch eine entsprechende Einrichtung, die frische Flüssigkeit zudosiert oder die alte Flüssigkeit vollständig ersetzt, ergänzt werden.

Somit kann erfindungsgemäß eine Kontrolle des Verhaltens der Anlage über die gesamte Betriebszeit, eingeschlossen einer Dokumentation derselben, durchgeführt werden.

Nachfolgend werden bevorzugte Ausführungsformen der Erfindung anhand der schematischen Zeichnung näher erläutert, wobei die Erfindung aber keineswegs auf diese Ausführungsform begrenzt ist, sondern dem Fachmann beliebige weitere Ausführungsformen geläufig sind. In dieser zeigt:
Fig. 1 ein Blockdiagramm eines Farbeindringprüfungsverfahrens
Fig. 2 eine schematische Darstellung einer Rißprüfanlage

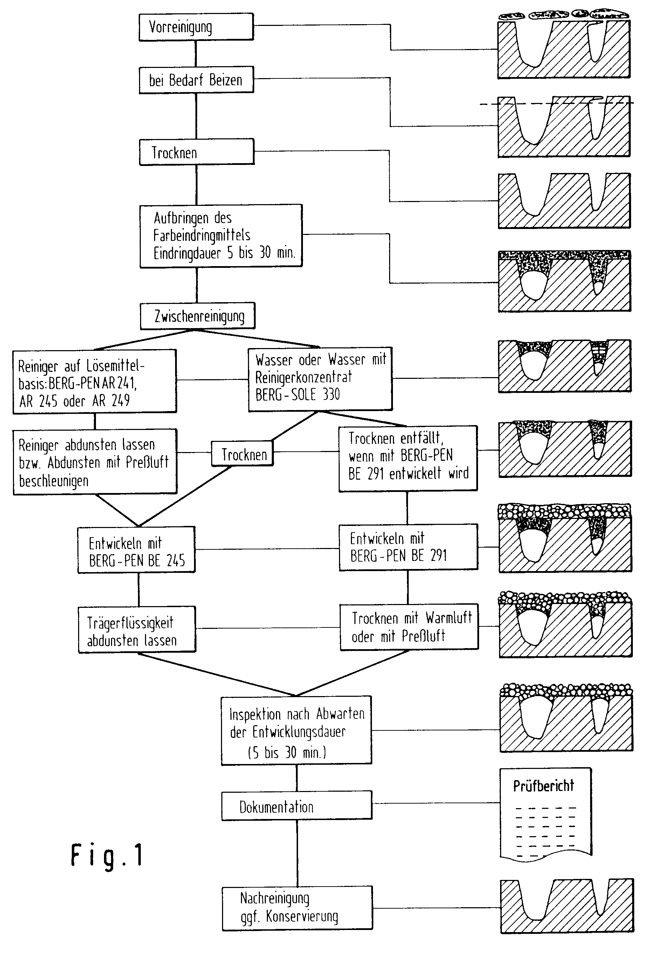

Wie aus Fig. 1 ersichtlich, wird beim Rißprüfverfahren nach der Farbeindringmethode ein - meist nicht ferritisches - Prüfteil, wie es bspw. ein Aluminium- oder Magnesiumteil aber auch ein Keramikteil sein kann, gereinigt, ggf. gebeizt und getrocknet und sodann mit dem Prüfmittel - auch als Farbeindringmittel bezeichnet - behandelt. Das überschüssige Farbeindringmittel wird nach einem bestimmten Zeitraum abgenommen, das Werkstück zwischengereinigt und sodann mit einer Entwicklerlösung behandelt. Nach der Entwicklungszeit wird das Werkstück ggf. getrocknet und inspiziert und eine Aussage über die Fehlerhaftigkeit des Werkstückes getroffen, die ggf. auch dokumentiert wird.

Wie aus Fig. 1 ersichtlich, wird ein entwickeltes Werkstück 10 als Prüfling in eine Prüfstation geführt, in der durch Sprühdüsen 13 das Farbeindringmittels aus einem Farbeindringmitteltank 12 aufgebracht wird - dies ist lediglich beispielhaft dargestellt - tatsächlich durchläuft der Prüfling mehere Stationen, in denen er mit Reinigungs- und Beizlösungen sowie Entwicklerlösungen und Farblösungen behandelt wird, die hier nicht dargestellt sind. In der Leitung zu den Sprühköpfen ist eine Prüfmittelüberprüfungs- und nachdosieranlage 17 in line vorgesehen, bevorzugt eine solche nach der DE-A-4438510.2.

Dort wird das Prüfmittel auf Funktionsfähigkeit überprüft und es kann ggf. Farbstoff od. dgl. in den Tank 12 nachdosiert werden, falls dies notwendig ist.

Der Prüfling wird bei dieser Ausführungsform, die mit fluoreszenzfähigem Farbstoff arbeitet, mittels einer UV-Lampe 11 bestrahlt, die wiederum in an sich bekannter Weise überwacht und deren Strom entsprechend nachgeregelt werden kann.

Aus einem Vorratsbehälter 12 (bei einfacheren Ausführungsformen mittels eines Sprays), der an eine Umwälzpumpe angeschlossen ist, wird über eine Zuführleitung mittels Sprühköpfen 13 einer Sprühanlage Prüfflüssigkeit 13a, die der Markierung der Oberflächenfehler dient, zugeführt und über die Oberfläche des Werkstückes 10 zerstäubt. Die Prüfflüssigkeit verteilt sich nun auf dem Werkstück, wobei sich die Farbstoff-Partikel - wie als physikalisches Phänomen allgemein bekannt - durch die Oberflächenspannung an Rissen konzentrieren. An diesen Stellen findet sich dann eine erhöhte Partikelkonzentration. Die überflüssige Prüfflüssigkeit wird, bspw. durch Abwischen, entfernt. Anschließend wird der Prüfling mit einer Entwicklerflüssigkeit bearbeitet. Nach Verstreichen einer - experimentell für jede Prüfanordnung und Prüflinge zu bestimmenden Entwicklungszeit wird dann durch eine Lampe - hier eine UV-Lampe 11 - die Oberfläche des Werkstücks 10 bestrahlt, dadurch die Prüfflüssigkeitspartikel zum Fluoreszieren oder aber zur Absorption gebracht und die im Bereich der Oberflächenrisse sich anreichernden Farbstoffpartikelchen beobachtet bzw. deren inhomogene Anordnung ausgewertet, wobei Risse als helle Formen im Fluoreszenzlicht erstrahlen, falls ein Fluoreszenzfarbstoff verwendet wird. Erfindungsgemäß gehört zur Funktionssicherheit der Anlage eine Selbstüberprüfungseinrichtung zur Kontrolle bzw. Selbstkontrolle zugehöriger Arbeitsparameter d. h. die Einhaltung der jeweiligen Betriebsgrößen innerhalb des vorgeschriebenen Werteintervalles durch und kann dann, wenn die Meßwerte sich außerhalb eines erwünschten Meßwertbereiches befinden, innerhalb bestimmter Grenzen nachregeln - dadurch kann unnötige Materialverschwendung, wie sie durch vorzeitigen Ersatz des Markierungsmittels oder auch durch vorzeitigen routinemäßigen Austausch der Beleuchtung, wie einer UV-Lampe od. dgl. auftritt, vermieden werden. Dadurch erhöht sich die Standzeit der Prüfanlage beträchtlich, sie kann länger unterbrechungsfrei laufen und die damit zusammenhängenden Betriebskosten, als auch die für Material und Energie werden darausfolgend ebenfalls abgesenkt. Die Selbstüberprüfungseinrichtung ist hier an eine Dokumentationseinrichtung 30, einen Drucker, angeschlossen, in der sie Prüfprotokolle erstellt, anhand derer die Funktionsfähigkeit der Anlage nachgewiesen werden kann. Selbstverständlich ist die Dokumentationseinrichtung nicht auf Drucker beschränkt - es können stattdessen optische Datenträger, wie CD-Rom, gebrannt werden oder aber es kann eine Speicherung auf anderen magnetisch-optischen Trägern erfolgen.

Bei der Prüfung einer Vielzahl relativ schnell durchlaufender Werkstücke, für deren Besprühung eine beachtliche Menge an Prüfflüssigkeit erforderlich ist, muß das Prüfmittel einmal der Menge nach optimiert, zum anderen aber überwacht werden, daß die Prüfflüssigkeit nach einer gewissen Betriebszeit noch mit der vorgeschriebenen Konzentration an färbendem bzw. fluoreszenzfähigem Material vorliegt. Das Prüfmittel, z. B. das fluoreszenzfähige Konzentrat der Anmelderin, das Zusätze enthält, unterliegt nach vorherbestimmbaren Überprüfungszeiträumen, bspw. etwa alle zwei Stunden nach Arbeitsbeginn, einer Überprüfung mit hilfe eines an sich bekannten birnenförmigen Kontrollbehälters, der mit einer Höhenmarkierung versehen ist und in dem nach einer Absetzzeit die Höhe des Niederschlages, gemessen in Teilstrichen und danach bestimmt wird, ob die Prüfflüssigkeit noch brauchbar ist oder nicht bzw. ob der Flüssigkeit frisches Anzeigemittel (Pulver) zugegeben werden muß. Die zugehörigen Werte sind dem Fachmann auf dem Gebiet bekannt.

Hier kommt es also darauf an, bei einer über Tage od.dgl. sich erstreckenden kontinuierlich oder auch unterbochen laufenden Prüfanlage insbesondere durch eine kontinuierlich erfolgende und ständig verfügbare Kontrolle schnell und sicher mindestens ein Signal herzustellen, das angibt, ob mit dem noch verwendeten Prüfmittel weitergearbeitet werden darf, - ggf. welche Zeit in etwa noch zur Verfügung steht, um mit ihr zu arbeiten bzw. ob neues Prüfmittel anzusetzen ist. Durch die Verarbeitung der von den Meßeinrichtungen erhaltenen Meßsignale kann sich ein erheblicher Einsparungsfaktor an Prüfmitteln ergeben.

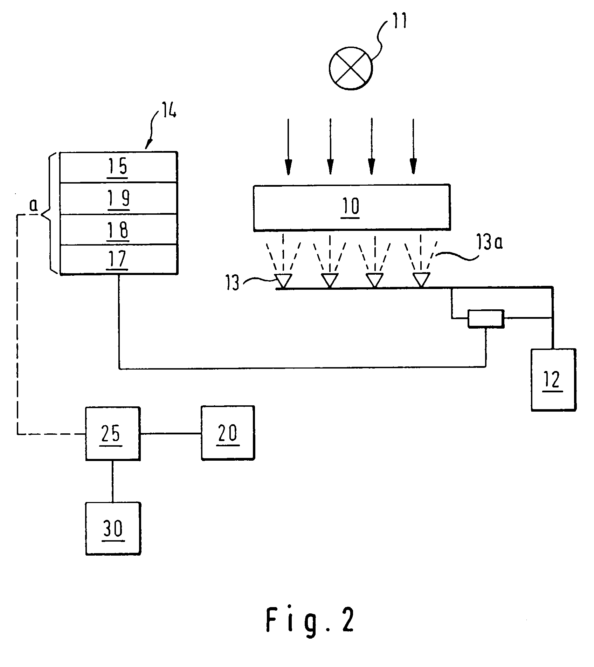

Zur zunächst kostenmäßigen Erfassung des Materialparameters Prüfmittel, aber auch anderer Kostenfaktoren, dient die schematisch in Fig. 2 dargestellte Selbstprüfeinheit 14, die vereinfacht als Meßwerte-Eingabe und Erfassungsgerät zu verstehen ist. In dieser Selbstprüfeinheit 14 sind, als separate schematische Meßeinheiten dargestellt, vorgesehen: eine Meßeinheit 17 für das Prüfmittel zur Erfassung der Konzentration des Prüfmittels; eine Meßeinheit 18 für die Messung der Strahlungsintensität der Bestrahlungseinrichtung und die Photosensorsignale, entsprechend der in dieser bevorzugten Ausführungsform verwendeten Lampe eine UV-Meßeinheit; im Paket können weitere Meßeinheiten enthalten sein, z. B. eine Meßeinheit für das Reinigungsmittel und/oder die Entwicklerflüssigkeit 15, falls diese ebenfalls im Kreis geführt werden, da diese nach einiger Zeit Prüffarbstoff, Schmutz oder Wasser aufnehmen und dann nicht mehr verwendbar sind. Diese Meßeinheiten können den Prozessor der Einheit dazu veranlassen, Nachregeleinheiten anzuschalten, um die Eigenschaften der Überprüften zu ändern, ohne daß menschliches Eingreifen notwendig ist.

Die Meßeinheiten können nach einer Ausführungsform der Erfindung entweder einzeln, als Meßeinheitengruppe oder jeweils alle zusammen in ihren zugehörigen Ausgangsmeßgrößen abgeben, die dem jeweiligen Eingang eines Anzeigesichtgerätes 20 eingespeist sind. Dieses weist jeweilige Erfassungs- und Verarbeitungseinheiten auf.

Gemäß einer Ausgestaltung der Erfindung ist es vorteilhaft, hierfür (im anderen Zusammenhang bekannte) spezifisch farbige Felder zu verwenden. Dies kann z. B. in der Reihenfolge grün/gelb/rot im Sinne des für den Beobachter geltenden Signals "bedenkenlos ― noch zulässig ― unzulässig (Gefahr)" erfolgen.

Bei einer globalen Selbstkontrolle zeigt die Anzeigevorrichtung 20 nur an, daß einer der Betriebsparameter nicht in Ordnung ist. Bei zulässig größerem Kostenaufwand der Vorrichtung kann selbstverständlich zu jeder einzelnen Meßeinheit 15, 18 usw. je ein separates eigenes Meßfeld, insbesondere ein farbiges Meßfeld und eine zugehörige Meßanzeige, z. B. ein lineares Markierelement od. dgl. vorgesehen sein, sodaß die Betriebsparameter einzeln überwacht und dokumentiert werden können.

Die gegenständliche Erfassung und Ausgabe der Meßwerte der Meßeinheiten kann, wie einzeln für sich bekannt, wie folgt erfolgen: Die Überwachung der Funktionsfähigkeit der Meßeinheit 14 kann zusätzlich auch noch mit Hilfe eines Testkörpers ausgeführt werden, der einen Testriß aufweist und der auf der Oberfläche Skalenwerte besitzt, deren Abstand in Längsrichtung vorherbestimmt ist. Die Überprüfung der Beleuchtungsstärke mittels der Meßeinheit 18 hängt unmittelbar mit einer vorgeschriebenen Prüfung der UV-Lampen zusammen und kann mit einem handelsüblichen UVIntensitätsmeßgerät, Typ J221 der Anmelderin ausgeführt werden. Die Überwachung dieser Meßgröße ist auch deshalb erforderlich, weil das Leuchtverhalten von Lampen in Abhängigkeit von der Betriebsdauer Änderungen unterliegt, die Intensität geringer wird, sich aber auch spektral ändert - aber auch wegen Verschmutzung des als Filter verwendeten Lampenglases.

Bevorzugt ist die automatische Meßeinheit 17 für das Prüfmittel eine automatisierte "ASTM-Birne". Dabei wird das Prüfmittel durch Messung der optischen Dichte sowie des Fluoreszenzverhaltens - bevorzugt in regelmäßigen Zeiträumen automatisch - überprüft. Zu diesem Zweck wird Prüfmittelsuspension, die aus einem flüssigen Träger und Farbstoff-Partikeln besteht, aus dem Prüfmittelkreislauf der Prüfanlage abgezweigt, in ein Prüfrohr oder Küvette gebracht und dort stehengelassen, sodaß sich eine ruhende, nicht turbulente Flüssigkeit zum Prüfen ergibt. Dort wird dann die Dichte dieser ruhenden Flüssigkeit in Transmission mit bekanntem Sensor und die Fluoreszenz über einen auf die Wellenlänge der Fluoreszenzstrahlung (hier im Grün-Bereich, da dort die Fluoreszenz auftritt) eingestellten Sensor gleichzeitig gemessen. Es werden zu verschiedenen Zeitpunkten ab Einführen von Prüfmittel ins Prüfrohr zeitlich verschoben Meßwerte ermittelt. In jedem Fall wird ein Anfangswert der Trans-mission und Fluoreszenz nach Einführen der fluiden Prüf-mittelsuspension in das Prüfrohr sowie mindestens ein weiterer Wert jeweils für T und F zum Zeitpunkt T nach dem Einführen gemessen.

Bei Alterung des Prüfmittels ändert sich die Teilchengröße der Partikel aber auch die Fluoreszenzfähigkeit. Danach steigt die Extinktion wegen wachsenden Anteils an kleineren, langsam absinkenden Partikeln durch Abrieb und die Fluoreszenz sinkt, da das fluoreszenzfähige Material aufgrund der Bestrahlung einer photochemischen als auch einer allgemeinen Alterung durch die mechanische Beanspruchung desselben sowie weiteren Belastungen unterliegt.

Somit können durch die Prüfmitteltesteinheit folgende Größen mit Aussagefähigkeit gemessen werden, die dann zu einem Ausgabesignal der Prüfmitteltesteinheit führen, das die Verwendbarkeit des Prüfmittels angibt:

Schmutzeintrag im Prüfmittel - bspw. Abrieb aus Werkstücken etc. zeigt sich als sinkende Transmission und sinkende Fluoreszenz am Meßanfang; Wassereintrag zeigt sich als steigende Transmission und Wasseraustrag als Höherkonzentration an Partikeln, also sinkende Transmission und steigende Fluoreszenz.

Bei Verlust an Partikeln sinkt die Fluoreszenz und bei Abrieb von Fluoreszenz-Material verbleibt nach dem Absetzen der magnetischen Partikel, die schwerer als Wasser sind, Fluoreszenz in der überstehenden Flüssigkeit erhalten - also fluoresziert die Flüssigkeit verbrauchten Prüfmittels stärker nach dem Absetzen, als bei funktionsfähigem Prüfmittel.

Es ist bevorzugt, daß das Prüfrohr in Art einer selbstreinigenden Durchflußküvette ausgebildet ist - also bei Beendigung der Messung neue Flüssigkeit das Prüfrohr durchströmt und so dasselbe reinigt. Es kann auch eine separate CIP-Einheit (Cleaning-in process) für das Prüfrohr vorgesehen sein, um nicht durch das Prüfmittel entfernbare Verunreinigungen, wie verbrannte oder polymerisierte organische Verbindungen, die zur Verschmutzung des Prüfrohres und damit zur Verfälschung von Messungen führen können, zu lösen.

Eine Kontrolle auf Reinigung des Werkstückes 10 kann ggf. mit einem Meßgerät MP1 der Anmelderin ausgeführt werden, also die Prüfung auf eine Restverschmutzunng erfolgen.

Erfindungsgemäß wird a der Ausgang bzw. die Ausgänge des Meßeinheiten-Paketes 14, wie gestrichelt angedeutet, über eine Leitung mit der Eingabestation eines Prozeßrechners 25 (PC) einer EDV-Anlage verbunden. Der Datenfluß aus einem (nicht dargestellten) Datenerfassungsgerät des Meßeinheitenpaketes 14 gelangt also unmittelbar in die Eingabestationen usw. bzw. ihre Speicher, wird verarbeitet und über die Prozeßstationen usw. des Ausgabeteils des Prozeßrechners 25 einem Schreibgerät, z. B. einem Laser-Drucker oder einem Tintenstrahlschreiber 30 zugeführt. Auf einem zugehörigen Aufzeichnungsmaterial, wie Schreibpapier werden somit im Laufe des Betriebes über Tage sowie längere oder auch kürzere Betriebszeiträume hinweg die erfaßten und zu überwachenden Werte als Dokumente ausgedruckt. Durch ein zugehöriges Zeitgerät entsteht somit je Zeiteinheit ein Kontrolldokument, welches insbesondere nachträgliche Überprüfung von Werkstückpartien odgl. gestattet. Hierbei ist es möglich, die einzelnen statistischen Werte des Werkstückflusses, wie Teileart oder -numner, Stückzahl oder sonstige Bezeichnung in eine feste Wechselbeziehung mit den Daten aus einer oder mehreren Meßwerteinheiten 15-18 zu bringen. Ferner dient das Prüfdokument als Auskunft über ein voreingestelltes Fehlergrößenintervall in Abhängigkeit von der Zeit und die Werkstückart, wenn mit dem vorbezeichneten Testkörper eine vorbestimmte Fehlergröße vorgegeben war.

Das Sicherheits- und Kontrolldokument gestattet auch eine Nachkontrolle von am Sichtgerät arbeitenden Bedienungspersonen, so daß z. B. in einer Nachtschicht getroffene Beurteilungen nachprüfbar und ggfs.nachkorrigierbar sind.

Die Erfassung des auf Helligkeitswerte zurückgehenden Datenflusses kann statt von einer Person auch vorteilhaft durch eine Kamera oder auch durch eine Diodenzelle oder andere geeignete Mittel, wie sie dem Fachmann geläufig sind, geschehen.

Selbstverständlich kann die Dokumentation über Datenfernübertragung auch von der Vorrichtung entfernt erstellt und abgespeichert werden.

Obwohl die Erfindung anhand eines bevorzugten Ausführungsbeispiels erläutert wurde, sind dem Fachmann Abwandlungen, die unter den Schutzumfang der Ansprüche fallen, geläufig. Die Erfindung ist daher keineswegs auf die beschriebene Ausführungsform begrenzt.

## Patentansprüche

1. Rißprüfanlage, in der in an sich bekannter Weise Werkstücke für die Farbeindringprüfung mit Farbstoffe aufweisendem Prüfmittel unter Anreicherung der Farbstoffe an Oberflächenfehlern behandelt, unter Beleuchtung durch einen Beleuchtungskörper bewertet werden, gekennzeichnet durch eine Selbstprüf- und Funktionsüberwachungseinrichtung (14) mit
- einem Prozessor (25)
- mindestens einer Meßstation (15 - 18) für die Erfassung von Arbeits-Meßgrößen, deren mindestens ein Ausgang mit dem mindestens einen Eingang des Prozessors (25) verbunden ist;
- mindestens ein mit dem Prozessor verbundenes Anzeige- bzw. Datensichtgerät (20) zur Anzeige einer oder mehrerer Meßgrößen,
- mindestens eine mit dem Prozessor verbundene Nachregelungseinheit (21) zur Nachregelung von Anlagenparametern, und
- mindestens eine Datenaufzeichnungsstation zur permanenten Aufzeichnung der gemessenen Daten.

2. Rißprüfanlage nach Anspruch 1, ferner gekennzeichnet durch eine Kamera zur Erfassung der integralen Empfindlichkeit, die den automatisierten Testfehlerdurchlauf automatisch aufnimmt und die gemessenen Signale einer Bewertung zuführt.

3. Rißprüfanlage nach Anspruch 1 oder 2, dadurch gekennzeichnet, daß die Meßstationen (15 - 18) für die Erfassung von Arbeits-Meß-größen mindestens eine Einrichtung ausgewählt aus den nachfolgenden, aufweisen:
- eine Einrichtung zur Überprüfung der Funktion des Beleuch tungskörpers (18) und der Strahlungsempfänger,
- eine Einrichtung (17) zur Überprüfung des ggf. im Kreis geführten Prüfmittels,
- eine Einrichtung zur Überprüfung der ggf. im Kreis geführten Entwicklerflüssigkeit
- eine Einrichtung zur Überprüfung der ggf. im Kreis geführten Beizmittel
- eine Einrichtung zur Überprüfung einer oder mehrerer im Kreis geführter Reinigungsmittel,
- eine Meßeinrichtung für die Erfassung unmittelbar werkstückbezogener Parameter, wie Teile-Identifizierungs-Nummern, Stückzahl, und/oder Bewertungsgrößen der Rißbildung, wie Gut/Schlecht-Aussage, Fehlergrößenbeurteilung nach vorgegebenem Größenintervall oder in vorgegebenem Oberflächenbereich, umfasst
wobei Meßstationen Prüfsignale ausgeben und in den Prozessor (25) leiten, der dazu befähigt ist, aus diesen Signalen aufgrund eines abgespeicherten Verarbeitungsprogramms, das ggf. auch abgespeicherte Nachschlagetabellen oder Vergleichswerte in einem Speicher verwendet, ein oder mehrere Endausgabesignale herzustellen, die sodann weiterverarbeitbar sind, wobei der Prozessor (25) der Selbstprüfeinheit mit einem Ausgabegerät (32) für permanente Aufzeichnungen, wie einem Drucker und/oder einer optischen oder magnetischen Speichereinheit und/oder einem Anzeigegerät und/oder einer Datenfernübertragungsvorrichtung zur Verarbeitung/Anzeige/Speicherung der Daten an einem anderen Ort verbunden ist.

4. Rißprüfanlage nach einem der vorangehenden Ansprüche, dadurch gekennzeichnet, daß die Signale der Überprüfungseinrichtung(en) in Nachregeleinheiten zum Nachregeln der entsprechenden überprüften Größen geleitet sind.

5. Rißprüfanlage nach einem der vorangehenden Ansprüche, dadurch gekennzeichnet, daß die Nachregeleinheiten eine Einrichtung zur Nachregelung der Beleuchtungskörperspannung bzw. der Sensorempfindlichkeit der Lampenüberwachungssensoren durch den Prozessor (25) aufweisen.

6. Rißprüfanlage nach einem der vorangehenden Ansprüche, dadurch gekennzeichnet, daß die Nachregelungseinheiten eine Einrichtung zur Nachregelung der Prüfmittelkonzentration durch Nachdosieren von Farbstoff durch den Prozessor (25) aufweist.

7. Rißprüfanlage nach einem der vorangehenden Ansprüche, dadurch gekennzeichnet, daß die Nachregelungseinheiten Einrichtungen zur Nachregelung der Reinigungsmittelkonzentration durch Nachdosieren von Reinigungsmittel und/oder Lösungsmittel durch den Prozessor (25) aufweisen.

8. Rißprüfanlage nach Anspruch 1 oder 2, dadurch gekennzeichnet, daß die Nachregelungseinheiten Einrichtungen zur Nachregelung der Beizmittelkonzentration durch Nachdosieren von Beizmittel oder Lösungsmittel durch den Prozessor (25) aufweisen.
